(19) Europäisches Patentamt
European Patent Office
Office européen des brevets

(11) Numéro de publication: **0 149 382**
**B1**

# (12) FASCICULE DE BREVET EUROPÉEN

(45) Date de publication du fascicule du brevet: **16.03.88**

(51) Int. Cl.⁴: **C 08 L 83/04** // (C08L83/04, 57:08, 83:14)

(21) Numéro de dépôt: **84402536.1**

(22) Date de dépôt: **10.12.84**

## (54) Compositions élastomériques organopolysiloxaniques vulcanisables à chaud à caractéristiques physiques améliorées.

(30) Priorité: **21.12.83 FR 8320448**

(43) Date de publication de la demande: **24.07.85 Bulletin 85/30**

(45) Mention de la délivrance du brevet: **16.03.88 Bulletin 88/11**

(84) Etats contractants désignés: **AT BE CH DE FR GB IT LI LU NL SE**

(56) Documents cité:
**EP-A-0 051 369**
**FR-A-2 380 326**
**GB-A-1 022 266**
**GB-A-2 060 667**
**US-A-3 070 560**

**Le dossier contient des informations techniques présentées postérieurement au dépôt de la demande et ne figurant pas dans le présent fascicule.**

(73) Titulaire: **RHONE- POULENC CHIMIE, 25, quai Paul Doumer, F-92408 Courbevoie Cédex (FR)**

(72) Inventeur: **Lagarde, Robert, 62, rue de l'Oasis, F-69320 Feyzin (FR)**
Inventeur: **Bouverot, Noel, Rue de Chassagne Ternay, F-69360 Saint- Symphorien d'Ozon (FR)**

(74) Mandataire: **Seugnet, Jean Louis, RHONE-POULENC INTERSERVICES Service Brevets Chimie Centre de Recherches de Saint- Fons B.P. 62, F-69192 Saint- Fons Cédex (FR)**

EP 0 149 382 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

**Description**

La présente invention a pour objet des compositions organopolysiloxaniques, formées principalement par mélange de gommes diorganopolysiloxaniques, de charges, d'un groupe d'additifs particuliers et de peroxydes organiques. Ces compositions ont l'avantage, d'une part d'être faciles à travailler à l'état cru et, d'autre part de conduire, après durcissement à chaud, à des élastomères ayant de bonnes caractéristiques physiques telles qu'une faible déformation rémanente à la compression et une élasticité élevée.

L'introduction de divers additifs pour modifier les propriétés des compositions diorganopolysiloxaniques, et des élastomères en découlant, est décrite dans de nombreux documents dont les premiers remontent aux débuts de la commercialisation des élastomères silicones durcis à chaud.

Parmi ces additifs figurent:

1) des composés organosiliciques possédant des liaisons SiH dont l'utilisation est enseignée notamment:

- dans FR-A-1 278 278; les élastomères silicones adhèrent sur eux-mêmes et sur divers substrats. Des organopolysiloxaniques linéaires (en fait des hydrogénoorganopolysiloxanes) sont utilisés à raison de 4 à 20 parties pour 100 parties des gommes diorganopolysiloxaniques. Des charges renforçantes et non-renforçantes peuvent être ajoutées.

- dans FR-A-1 363 839; les élastomères silicones ont des caractéristiques diélectriques améliorées et une bonne adhérence sur divers supports. L'exemple 1 de ce brevet illustre l'emploi de 0,5 partie d'un méthylhydrogénopolysiloxane pour 99,5 parties d'une gomme méthylvinylpolysiloxanique.

- dans FR-A-1 377 569; les élastomères adhèrent sur eux-mêmes. Dés hydrogénoorganopolysiloxanes sont introduits à raison d'au plus 20 parties (dans les exemples, de l'ordre de 12 à 13 parties) pour 100 parties des gommes diorganopolysiloxeniques; des organopolysiloxanes modifiés par le bore sont, en outre, ajoutés à raison de 5 à 60 parties pour 100 parties des gommes diorganopolysiloxaniques.

- dans JP-A-48.093658, 73.093658; les élastomères ont une faible déformation rémanente à la compression et sont peu affectés par le phénomère de l'efflorescence. Des hydrogénoorganopolysiloxanes sont introduits dsns la proportion de 0,1 à 10 parties pour 100 parties des gommes diorganopolysiloxaniques; également, des dérivés du calcium sont mis en oeuvre (hydroxyde, oxyde, hydrure, péroxyde) dans les mêmes proportions que celles des hydrogénoorganopolysiloxanes.

- dans la GB-A-2.060.667. les élastomères conviennent pour la fabrication de joints d'étanchéité pour arbres d'entrainement. Des hydrogénopolysiloxanes sont introduits à raison de 0,1 à 10 parties pour 100 parties des gommes diorganopolysiloxaniques. Deux types de charges sont utilisées: une silice renforçante et de la terre de diatomées. De plus, page 2, - lige 34 et page 4 lige 9, l'utilisation de polymère fluoré est suggérée.

2) des polymères organofluorés sous forme de poudres ou de substances colloïdales dont l'utilisation est enseignée notamment:

- dans US-A-2 710 290; les élastomères ont des propriétés mécaniques très performantes, en particulier la résistance au déchirement est élevée. De la poudre de polytétrafluoroéthylène, de diamètre particulaire 0,15 à 100 μ est introduite à raison de 1 à 20 parties pour 100 parties de la gomme diorganopolysiloxaniques.

- dans US-A-4 010 136; les élastomères ont une surface lisse et uniforme. Une poudre de polytétrafluoroéthylène est introduite, ayant un diamètre particulaire moyen inférieur à 1000 μ, à raison de 0,3 à 1 partie pour 100 parties d'un mélange formé à partir de 100 parties de gommes diorganopolysiloxaniques et de 15 à 25 parties de silices renforçantes.

- dans EP-A-51.369; les élastomères résistent aux huiles et aux carburants chauds. De la poudre de polytétrafluoroéthylène, de diamètre particulaire moyen de l'ordre de 30 à 500 μ est introduite à raison de 0;8 à 5 parties pour 100 parties d'un mélange de gommes silicones fluorées et de silices renforçantes.

3) des alcoxysilanes possèdent chacun, lié à l'atome de silicum, un groupe acroyloxy ou méthacroyloxyalcoyle, dont l'utilisation est enseignée notamment:

- dans US-A-3 379 607; un composé tel que le méthacroyloxypropyltriméthoxysilane de formule $CH_2=C(CH_3)COO(CH_2)_3-Si(OCH_3)_3$ qui est connu pour améliorer l'adhérence, est intimement mélangé avec un élastomère polysiloxanique (liges 28 à 33, colonne 1).

- dans JP-A-50.061450; des fibres de polyesters traitées par le méthacroyloxypropyltriméthoxysilane, sont utilisées comme charges dans des compositions silicones durcissables à chaud en élastomères.

- dans JP-A-53.118452; l'example 1 montre l'introduction, à titre comparatif, de 1,5 partie du méthacroyloxypropyltriméthoxysilane pour 100 parties d'une gomme diméthylpolysiloxanique. Les compositions conduisent à des élastomères qui adhèrent fortement à divers supports.

- dans US-A-4 202 812; des acroyloxy(ou méthacroyloxy)alcoylalcoxysilanes sont introduits à raison de 0,08 à 0,3 partie pour 100 parties d'une base de caoutchouc silicone associées avec 25 à 300 parties de charges non renforçantes. Les élastomères ont des propriétés dynamométriques améliorées.

4) des dérivés du bore ou le produit de réaction de ces dérivés avec des polymères organopolysiloxaniques, dont l'utilisation est enseignée:

- dans FR-A-1 130 806; les compositions silicones sont aisées à mettre en oeuvre. Les dérivés du bore tels que l'acide borique, l'anhydride borique, les borates d'alcoyles, sont ajoutés à rason de 0,005 à 0,09 partie pour 100 parties des gommes diorganopolysiloxanique.

- dans le US-A-3 070 560; les compositions sont faciles à travailler, elles ne collent pas sur les mélangeurs à cylindres, les bras des pétrins. Des dérivés du bore tels que des borates d'alcoyles, l'acide et l'anhydride boriques, les borates de silyles sont introduits à raison de 0,015 à 0,25 partie pour 100 parties des gommes

diorganopolysiloxaniques. En outre, sont présentes des huiles alpha-omega di(hydroxy)diorganopolysiloxaniques ayant au moins 1 % en poids de groupes OH.

- dans FR-A-1 248 776, les élastomères sont auto-adhérents. Ils renferment de 0,5 à 50 parties, pour 100 parties des gommes diorganopolysiloxaniques, d'un polysiloxane boré provenant de la condensation d'une résine alcoxypolysiloxanique avec un complexe formé entre l'acide borique et un composé hydroxylé.

- dans FR-A-1 377 569 déjà mentionné dans le paragraphe 1, les organopolysiloxanes modifiés au bore sont préparés par réaction à chaud de l'ordre de 3 à 30 parties de dérivés du bore (tels que les borates d'alcoyles, l'acide et l'anhydride boriques, les borates alcalins et les alcalino-terreux, les hydrures de bore) avec 100 parties d'organopolysiloxanes, en présence ou non d'un catalyseur comme le chlorure ferrique. Les organopolysiloxanes appropriés sont, par exemple, les polymères di(hydroxydiméthylpolysiloxaniques, l'octaméthylcyclotétrasiloxane, les produits d'hydrolyse du diméthyldichlorosilane, ce dernier étant mélangé ou non avec du méthyltrichlorosilane.

Ainsi il ressort des documents précédents que des propriétés souvent intéressantes, mais parfois déroutantes telles que l'adhérence des élastomères sur eux-mêmes, peuvent être obtenues en utilisant l'un des additifs du groupe des hydrogénoorganopolysiloxanes, des dérivés du bore, des acroyloxy(ou méthacroyloxy) silanes et des polymères organofluorés.

Toutefois, les fabricants et les utilisateurs d'élastomères silicones recherchent des produits possédant un ensemble de propriétés constantes, bien définies (et non toutes les propriétés précédemment relevées) quelles que soient les quantités employées et la nature des principaux constituants des compositions durcissables en élastomères silicones.

En particulier, les fabricants voudraient travailler des compositions nerveuses, ne collant pas sur les cylindres des mélangeurs et ne se structurant pas au repos. Quant aux utilisateurs, ils désireraient plus spécialement mettre en oeuvre des élastomères ayant de bonnes caractéristiques dynamométriques, une faible déformation rémanente à la compression, une résilience élevée et une bonne stabilité thermique, ces qualités s'appliquant aussi bien à des élastomères opaques qu'à des élastomères translucides et même transparents.

Les documents précités n'indiquent pas les moyens à utiliser pour atteindre les résultats souhaités par les fabricants et utilisateurs d'élastomères silicones. Par contre, la présente invention a pour objet de proposer des moyens permettant d'atteindre de tels résultats.

Plus précisément, l'invention a pour objet l'incorporation, dans des compositions silicones durcissant à chaud, non pas d'un additif mais d'un groupe d'additifs comprenant au moins 3 des 4 additifs précédemment décrits. Contrairement à ce qui aurait pû se produire, ces additifs employés conjointement ne se neutralisent pas ou ne se dégradent pas par interaction mutuelle; bien mieux, d'une façon inattendue, ils présentent en groupe, une efficacité accrue.

L'invention a également pour objet les compositions organopolysiloxaniques, durcissables à la chaleur, renfermant les groupes d'additifs précités.

Dans ce qui suit, sauf mention contraire, les parties ou pourcentages sont en poids.

Les compositions selon l'invention sont formées par mélange de

A) 100 parties d'une gomme diorganopolysiloxanique ayant une viscosité supérieure à 1000.000 mPa.s à 25°C,

B) 5 à 150 parties d'une charge renforçante,

D) 0,1 à 7 parties d'un peroxyde organique et, d'un groupe d'au moins 3 additifs choisis parmi les 4 additifs suivants:

E) 0,1 à 5 parties d'un organohydrogénopolysiloxane;

F) 0,1 à 6 parties d'un polymère organofluoré;

G) 0,02 à 4 parties d'un composé organosiloxanique comportant, relié à l'atome de silicium, au moins un groupe acroyloxyalcoyle ou méthacroyloxyalcoyle;

H) 0,1 à 4 parties d'un composé renfermant du bore.

Les compositions selon l'invention peuvent contenir en outre jusqu'à 15 parties d'un huile diorganopolysiloxanique C) de viscosité d'au plus 5000 mPa.s à 25°C.

La charge renforçante est de préférence une silice renforçante de combustion ou de précipitation.

Les compositions préférées sont formées par mélange de:

A) 100 parties d'une gomme diorganopolysiloxanique ayant une viscosité supérieure à 1000.000 mPa.s à 25°C, formée d'un enchaînement de motifs de formule $R_2SiO$, bloquée à chaque extrémité de sa chaine par un motif de formule $R_3SiO_{0,5}$ et/ou un radical de formule OR'; dans ces formules les symboles R, identiques ou différents, représentent des radicaux méthyle, éthyle, n-propyle, phényle, vinyle et trifluoro-3,3,3 propyle au moins 60 % de ces radicaux étant méthyle et au plus 3 % étant vinyle, le symbole R' représente un atome d'hydrogène, un radical alcoyle ayant de 1 à 4 atomes de carbone, le radical bétaméthoxy-éthyle,

B) 5 à 150 parties d'une silice renforçante de surface spécifique d'au moins 50 $m^2/g$,

C) 0 à 15 parties d'une huile diorganopolysiloxanique de viscosité d'au plus 5000 mPa.s à 25°C formée d'un enchainement de motifs de formule $R''_2SiO$ bloquée à chaque extrémité de sa chaine par un radical de formule OR'; dans ces formules les symboles R'', identiques ou différents, représentent des radicaux méthyle, phényle, vinyle, au moins 40 % de ces radicaux étant méthyle et le symbole R' a la sigification donnée sous A),

D) 0,1 à 7 parties d'un peroxyde organique, et un groupe d'au moins 3 additifs choisis parmi les 4 additifs suivants:

E) 0,1 à 5 parties d'un organohydrogénopolysiloxane de formule générale moyenne $H_b(R'')_aSiO_{\frac{4-a-b}{2}}$ dans laquelle le symbole R'' a la signification donnée sous C), le symbole a représente un nombre quelconque allant

de 0,4 à 2 et le symbole b représente un nombre quelconque allant de 0,2 à 1,

F) 0,1 à 6 parties d'un polymère organofluoré utilisé sous forme d'un solide pulvérulent et/ou d'une dispersion aqueuse colloïdale,

G) 0,02 à 4 parties d'un composé organosilicique portant au moins un groupe acroyloxyalcoyle ou méthacroyloxylalcoyle choisi parmi:

- un silane répondant à la formule:

$$CH_2=CR^3COO(CH_2)_w\underset{(R'')_u}{\underset{|}{Si}}(OR^4)_{3-u}$$

dans laquelle le symbole R" a la signification donnée sous C), le symbole $R^3$ représente un atome d'hydrogène, le radical méthyle, le symbole $R^4$ représente un radical méthyle, éthyle, n-propyle, bétaméthoxyéthyle, le symbole w représente un nombre de 1 à 5 et le symbole u représente un nombre de 0 à 2;

- les produits d'hydrolyse partielle du silane précédent
- les polymères provenant de la réaction du silane de formule $CH_2=C(R^3)COO(CH_2)_wSi(OR^4)_3$, cette formule découlant de la formule précédente lorsque u = 0, avec une huile diorganopolysiloxanique choisie parmi les huiles C) bloquées à chaque extrémité de leur chaine par un radical hydroxyle,

H) 0,1 à 4 parties d'un composé renfermant du bore utilisé sous la forme d'un dérivé organique ou minéral du bore ou d'un borosiloxane provenant de la réaction dudit dérivé du bore avec un polyorganosiloxane de formule générale moyenne $R_c(OR')_dSiO_{\frac{4-c-d}{2}}$

dans laquelle les symboles R et R' ont chacun la signification donnée sous A), le symbole c représente un nombre quelconque allant de 0,5 à 3 et le symbole d représente un nombre quelconque allant de 0 à 1.

Les différents constituants des compositions selon l'invention sont explicités plus en détail ci-dessous.

Les gommes diorganopolysiloxaniques A) de viscosité supérieure à 1000.000 mPa.s à 25°C, de préférence supérieure à 2000.000 mPa.s à 25°C, sont des polymères linéaires, de poids moléculaire élevé, dont la chaine diorganopolysiloxanique est constituée essentiellement des motifs de formule précitée $R_2SiO$; cette chaine est bloquée à chaque extrémité par des motifs de formules $R_3SiO_{0,5}$ et/ou le radical de formule OR'. La présence, le long de la chaine diorganopolysiloxanique, de faibles quantités de motifs autres que $R_2SiO$, par exemple de formules $RSiO_{1,5}$ et/ou $SiO_2$ n'est cependant pas exclue dans la proportion d'au plus 2 % par rapport au nombre de motifs $R_2SiO$. Bien que la signification des radicaux R et R' soient explicités ci-dessus, on doit préciser que par radical alcoyle, on entend des radicaux alcoyles en $C_1$-$C_4$ et plus spécialement les radicaux méthyle, éthyle, n-propyle et n-butyle.

A titre d'exemples concrets de motifs de formules $R_2SiO$ et $R_3SiO_{0,5}$ et de radicaux de formule OR', peuvent être cités ceux de formules:

$(CH_3)_2SiO$, $CH_3(CH_2=CH)SiO$, $CH_3(C_6H_5)SiO$, $(C_6H_5)_2SiO$,
$CH_3(C_2H_5)SiO$, $(CH_3CH_2CH_2)CH_3SiO$, $CH_3(n.C_3H_7)SiO$
- $(CH_3)_3SiO_{0,5}$, $(CH_3)_2CH_2=CHSiO_{0,5}$, $(CH_3)C_6H_5)_2SiO_{0,5}$
- $(CH_3)(C_6H_5)(CH_2=CH)SiO_{0,5}$
- OH, $-OCH_3$, $-OC_2H_5$, -O-n.$C_3H_7$, -O-iso.$C_3H_7$, -O.n.$C_4H_9$
- $-OCH_2CH_2OCH_3$

De préférence, sont utilisées des gommes méthylvinylpolysiloxaniques contenant une faible quantité de radicaux vinyles, cette quantité représentant par exemple de 0,005 à 1,5 % du nombre des radicaux liés aux atomes de silicium.

Les gommes A) sont commercialisées par les fabricants de silicones; d'autre part, elles peuvent être fabriquées en opérant selon les techniques déjà connues.

Les charges, de préférence les silices renforçantes B) sont utilisées à raison de 5 à 150 parties, de préférence 8 à 100 parties, pour 100 parties des gommes diorganopolysiloxaniques A). Elles sont choisies parmi les silices de combustion et les silices de précipitation. Elles ont une surface spécifique, mesurée selon les méthodes BET et CTAB, d'au moins 50 $m^2/g$, de préférence supérieur à 70 $m^2/g$, une dimension moyenne des particules primaires inférieure à 80 nm et une densité apparente inférieure à 200 g/litre.

Ces silices peuvent être incorporées telles quelles ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu' à un taux de 20 %, de préférence 18 % environ.

En dehors des silices renforçantes B) peuvent être introduites des charges minérales plus grossières dont le diamètre particulaire moyen est supérieur à 0,1 µm. Ces charges sont représentées plus spécialement par le quartz broyé, les argiles calcinées, les silices de diatomées, le carbonate de calcium, les oxydes de fer, de

titane, de magnésium, d'aluminium. Elles sont introduites à raison d'au plus 120 parties, de préférence d'au plus 100 parties, pour 100 parties des gommes A). Ces charges minérales peuvent être utilisées telles quelles, c'est à dire non traitées ou traitées avec les composés organosiliciques mentionnés ci-avant dans le cas des silices renforçantes B).

Les huiles diorganopolysiloxaniques C) sont utilisées à raison de 0 à 15 parties, de préférence 0,3 à 12 parties pour 100 parties des gommes diorganopolysiloxaniques A). Ce sont des polymères linéaires de viscosité relativement peu élevée, au plus 5000 mPa.s à 25°C, de préférence au plus 4000 mPa.s à 25°C, dont la chaine diorganopolysiloxanique est formée essentiellement des motifs de formule précitée $R''_2SiO$; cette chaine est bloquée à chaque extrémité par un radical de formule précitée OR'. Au moins 40 % des radicaux R'' sont des radicaux méthyle, de préférence au moins 45 %.

La signification des symboles R'' et R' a été explicitée précédemment.

A titre d'exemples concrets de motifs de formule $R''_2SiO$ et de radicaux de formule OR', peuvent être cités ceux de formules:

$(CH_3)_2SiO$, $CH_3(CH_2{=}CH)SiO$ $CH_3(C_6H_5)SiO$, $(C_6H_5)_2SiO$,
$C_6H_5(CH_2\text{-}CH)SiO$,
$-OH$, $-OCH_3$, $-OC_2H_5$, -O-n. $C_3H_7$, $-OCH_2CH_2OCH_3$

De préférence, sont utilisées:

- des huiles diméthylpolysiloxaniques bloquées à chaque extrémité de leur chaine par des radicaux hydroxyle, méthoxyle, bétaméthoxyéthoxyle, de viscosité 10 à 200 mPa.s à 25°C;
- des huiles méthylphénylpolysiloxaniques, constituées de motifs $CH_3(C_6H_5)SiO$, bloquées à chaque extrémité de leur chaine par des radicaux hydroxyle et/ou méthoxyle, de viscosité 40 à 2000 mPa.s à 25°C.

L'utilisation des huiles C) a pour objet d'empêcher les compositions de l'invention de subir une évolution au cours du stockage, et plus précisément de se structurer, de durcir; ce sont donc des agents "antistructures". Leur utilisation est surtout recommandée lorsque les quantités de silices renforçantes B) sont élevées, par exemple au-dessus de 30-40 parties pour 100 parties de gommes A).

D'autres agents antistructures peuvent remplacer en totalité ou en partie, les huiles C), par exemple le diphénylsilanediol et les silanes de formules:

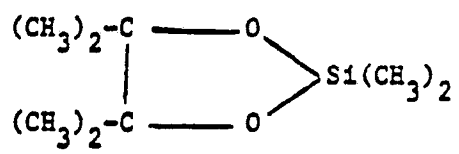

et

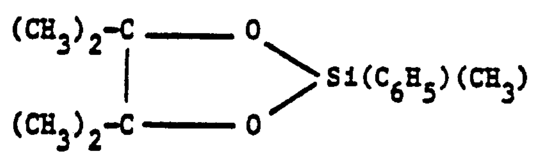

Cependant, ils sont souvent plus coûteux et/ou exigent plus de travail pour leur dispersion dans les compositions de l'invention que les huiles C).

Les peroxydes organiques D) sont utilisés à raison de 0,1 à 7 parties, de préférence 0,2 à 5 parties, pour 100 parties des gomme A). Ils sont bien connus des techniciens et comprennent plus spécialement le peroxyde de benzoyle, le peroxyde de dichloro-2,4 benzoyle, le peroxyde de dicumyle, le bis (t-butylperoxy)2,5 diméthyl-2,5 hexane, le perbenzoate de t-butyle, le carbonate de peroxy t-butyle et d'isopropyle, le peroxyde de di-t-tubyle, le bis(t-butylperoxy) - 1,1 triméthyl-3,3,5 cyclohexane.

Ces divers peroxydes se décomposent à des températures et à des vitesses parfois différentes. Ils sont choisis en fonction des conditions de durcissement exigées.

Les groupes d'additifs qui caractérisent les compositions de l'invention sont constitués d'additifs choisis parmi les organohydrogénopolysiloxanes E), les polymères organofluorés F), les composés organosiliciques portant au moins un groupe acroyloxy/ou (méthacroyloxy)alcoyle et les composés borés H). Chaque mélange ou groupe d'additifs renferme au moins 3 additifs.

Il y a ainsi le choix entre 5 groupes d'additifs comportant chacun:

(1) E, F, G
(2) E, F, H
(3) E, G, H
(4) F, G, H
(5) E, F, G, H

Les organohydrogénopolysiloxanes E) sont utilisés à raison de 0,1 à 5 parties, de préférence 0,2 à 4 parties pour 100 parties des gommes A). Ils répondent de préférence à la formule précitée $H_b(R'')_aSiO_{\frac{4-a-b}{2}}$ dans laquelle le symbole R'' représente un radical méthyle, vinyle, phényle, le symbole a représente un nombre allant de 0,4 à 2 et le symbole b un nombre allant de 0,2 à 1.

Ces organohydrogénopolysiloxanes E) sont choisis parmi les polymères linéaires, ramifiés ou cycliques, constitués de motifs choisis parmi ceux de formule:

$R''_2SiO$, $H(R'')SiO$, $H(R'')_2SiO_{0,5}$, $HSiO_{1,5}$, $R''SiO_{1,5}$, $SiO_2$, $R''_3SiO_{0,5}$

Ils peuvent être liquides, gommeux, ou résineux. En particulier:

- les polymères linéaires peuvent répondre à la formule ci-après:

$(H)_t(R'')_{3-t}Si(OSiR''_2)_x[OSi(R'')H]_yOSi(R'')_{3-t}(H)_t$

dans laquelle x - 0 à 10 000; y = 0 à 1000; t - 0 ou 1 ; y représente au moins 2 quand t = 0.

- les polymères cycliques peuvent répondre à la formule ci-après:

$(HR''SiO)_p\ (R''_2SiO)_{p'}$

dans laquelle p = 1 à 10, p' = 0 à 10.

- les polymères résineux peuvent être constitués:

de motifs de formules $H(R'')SiO$, $R''SiO_{1,5}$, $R''_2SiO$, répartis de manière à obtenir R''/Si = 1,05 à 1,5. H/Si = 0,3 à 0,5

de motifs de formules $H(R'')_2SiO_{0,5}$, $SiO_2$ répartis de matière à obtenir R''/Si = 0,5 à 1,3; H/Si = 0,25 à 0,7.

A titre d'exemples concrets, peuvent être cités les organohydrogénopolysiloxane:

- de formules: $(CH_3)_3Si[OSi(CH_3)H]_{y1}OSi(CH_3)_3$

y1 = 5 à 100

$H(CH_3)_2Si(OSiCH_3H)_{y2}[OSi(CH_3)_2]_{y3}OSi(CH_3)_2H$

y2 = 3 à 40

y3 - 5 à 60

- constitués de motifs de formules:

$(CH_3)_2HSiO_{0,5}$, $SiO_2$, avec $(CH_3)$/Si - 0,4 à 1,1

H/Si = 0,2 à 0,6

Les polymères fluorés F) sont utilisés à raison de 0,1 à 6 parties, de préférence 0,15 à 5 parties, pour 100 parties des gommes diorganopolysiloxaniques A). Ces composés sont bien connus des techniciens; ils sont préparés par polymérisation ou copolymérisation de monomères choisis par exemple dans le groupe du tétrafluoroéthylène, du chlorotrifluoroéthylène, du fluorure de vinylidène, de l'hexafluoropropène. Ce sont donc des polymères ou des copolymères constitués de motifs dérivés des monomères précédents; ainsi sont utilisables des polytétrafluoroéthylènes, les copolymères binaires du type polytétrafluoroéthylène-bétafluoropropène, ou du type fluorure de vinylidène-hexafluoropropène, les copolymères ternaires du type fluorure de vinylidène-hexafluoropropènetétrafluoroéthylène.

Ces composés peuvent être introduits dans les compositions de l'invention sous la forme de poudres de diamètre particulaire moyen inférieur à 1000 µm, par exemple de diamétre allant de 25 à 650 µm. Ils peuvent être introduits également sous la forme de dispersions ou émulsions aqueuses. Dans ce cas, les particules dispersées des polymères ont généralement un diamètre moyen de l'ordre de 0,01 à 15 µm, de préférence 0,02-12 µm; elles sont pratiquement à l'état colloïdal ou micellaire. Les dispersions peuvent présenter des taux variables en polymères fluorés, par exemple de l'ordre de 20 à 80 % en poids. En dehors des polymères fluorés, elles renferment des agents dispersants et éventuellement des agents basiques.

De préférence, les agents dispersants sont des composés tensioactifs non-ioniques tels que les alcoylphénolpolyoxyéthylénés, dans lesquels le groupe alcoyle renferme de 7 à 12 atomes de carbone et le groupe polyoxyéthylène de 8 à 15 motifs $-OCH_2CH_2-$. Les dispersions de particules colloïdales de polymères fluorés sont bien connues. Elles sont décrites en particulier dans US-A-2 478 229, US-A-2 534 058, et US-A-2 946 763.

Les composés organosiliciques G) sont utilisés à raison de 0,02 à 4 parties, de préférence 0,03 à 3 parties, pour 100 parties des gommes diorganopolysiloxaniques A). Ils comportent les silanes répondant à la formule générale précitée:

$CH_2=C(R^3)COO(CH_2)_wSi(R'')_u(OR^4)_{3-u}$

dans laquelle, comme déjà indiqué, le symbole R'' représente un radical méthyle, vinyle, phényle, le symbole $R^3$ représente un atome d'hydrogène, le radical méthyle, le symbole $R^4$ représente un radical méthyle, éthyle, n-propyle, bétaméthoxyéthyle, le symbole w représente un nombre de 1 à 5 et le symbole u représente un nombre de 0 à 2. Ils comprennent donc les méthacroyloxyalcoylalcoxysilanes et les acroyloxyalcoylalcoxysilanes qui figurent par exemple dans US-A-3 567 497.

A titre d'exemples concrets de ces silanes peuvent être cités ceux de formules:

$CH_2=CH-COOCH_2Si(OCH_3)_3$

$CH_2=CH-COOCH_2Si(OCH_2CH_2OCH_3)_2C_6H_5$

$CH_2=CH\text{-}COO(CH_2)_3Si(OC_2H_5)_3$
$CH_2=C(CH_3)COO(CH_2)_3Si(OCH_3)_3$
$CH_2=C(CH_3)COO(CH_2)_3SiCH_3(OCH_3)_2$
$CH_2=C(CH_3)COO(CH_2)_5Si(OCH_3)_3$

En-dehors des silanes sont utilisables dans les mêmes proportions, leurs produits d'hydrolyse partielle qui répondent à la formule générale moyenne:

$$CH_2=C(R^3)COO(CH_2)_w\underset{\substack{|\\(R'')_u}}{Si}(OR^4)_rO_{\frac{[3-(r+u)]}{2}}$$

dans laquelle les symboles R", $R^3$, $R^4$, w et u ont la signification donnée précédemment à propos de la formule des silanes G et le symbole r représente un nombre quelconque s'étendant de 0,5 à 2,2, la somme r + u s'étendant de 0,8 à 2,5.

Il est recommandé d'effectuer l'hydrolyse des silanes à des températures comprises dans l'intervalle 30 à 100°C, en présence d'un catalyseur acide tel que l'acide chlorhydrique, l'acide phosphorique, l'acide acétique, avec une quantité molaire d'eau inférieure à la quantité nécessaire pour hydrolyser toutes les liaisons $SiOR^4$ (une mole d'eau permet théoriquement de transformer 2 liaisons $SiOR^4$ en une liaison siloxanique Si-O-Si). L'hydrolyse peut avoir lieu au sein ou non d'un solvant hydrocarboné ou halogénohydrocarboné.

En dehors des silanes G/ et de leurs produits d'hydrolyse partielle, sont également utilisables, et dans les mêmes proportions, les produits de réaction des silanes de formule G'/:

$CH_2=C(R^3)COO(CH_2)_wSi(OR^4)_3$ (formule découlant de celle des silanes G/lorsque U - O)

avec des huiles diorganopolysiloxaniques C/ limitées à celles bloquées à chaque extrémité de leur chaîne par un radical hydroxylé, ayant une viscosité de 70 à 500 mPa.s à 25°C et renfermant au moins 60 % de radicaux méthyles et au plus 3 % de radicaux vinyles. Ces huiles seront appelées par la suite C'/.

Les huiles C'/ et les silanes G'/ doivent être mélangés en des proportions telles que le rapport molaire $SiOH/SiOR^4$ s'étende de 0,1 à 0,95. De plus, la réaction est catalysée à l'aide d'un composé choisi parmi les titanates et polytitanates d'alcoyles et les sels de diorganoétain d'acides carboxyliques aliphatiques, à raison de 0,05 à 2 parties, pour 100 parties du mélange des huiles C'/ et des silanes G'/. L'alcool formé, de formule $R^4OH$, au cours de la réaction peut être éliminé ou non des mélanges réactionnels.

Si on l'élimine, il ne faut pas dépasser 45 % de la quantité pondérale théorique basée sur le nombre des radicaux SiOH et $SiOR^4$ présents dans les mélanges. Un tel procédé est décrit dans le brevet français 2 447 386; il conduit à des compositions organopolysiloxaniques stables, de viscosité 60 mPa.s à 20 000 mPa.s à 25°C.

Les composés renfermant du bore H/ sont utilisés à raison de 0,1 à 4 parties, de préférence 0,2 à 3 parties, pour 100 parties des gommes diorganopolysiloxaniques A/.

Ces composés peuvent être introduits sous la forme de dérivés organiques ou minéraux du bore. Parmi ces composés, peuvent être cités l'acide et l'anhydride borique, l'acide tétraborique ou pyroborique $H_2B_4O_7$, les organoborates linéaires et cycliques de formules:

$$-\ R^5\left[\begin{array}{c}OB\\ |\\ OR^6\end{array}\right]_k\quad \begin{array}{l}OB-OR^6\\ |\\ OR_6\end{array}$$

et

- $(R^5OBO)_{k'}$,

dans lesquelles le radical $R^5$ représente un radical alcoyle ayant de 1 à 10 atomes de carbone, un radical phényle, le symbole $R^6$ représente $R^5$, un atome d'hydrogène, le symbole k représente 0 à 3 et le symbole k' représente 3 à 5.

A titre illustratif de ces organoborates, peuvent être cités, le borate de triméthyle, le borate de triéthyle, le borate de tri n-propyle, le borate de triphényle, la triméthylboroxine.

D'autres esters de l'acide borique ainsi que des hydrures de bore, des complexes du bore, des borates métalliques, pouvant être introduits, sont décrits dans US-A-3 231 542 colonne 6.

En outre, les dérivés organiques et minéraux du bore peuvent être introduits sous la forme de mélanges intimes avec d'autres composés non borés. Ainsi, il est possible d'utiliser un mélange comportant de l'acide borique, un polyalcool (tel que l'éthylèneglycol et le glycol) et des charges; ce type de mélange est décrit FR-A-2 451 927. Il est possible également d'utiliser un mélange d'oxydes mixtes de silice et de bore obtenu par combustion d'halogènures de bore et de silicium (US-A-3 855 171) ou un mélange de silice de précipitation et d'acide borique DE-A-2 716 225, FR-A-2 431 992).

En outre, les composés H/ renfermant du bore peuvent être introduits sous la forme de borosiloxanes; ces composés sont préparés par réaction des dérivés organiques ou minéraux du bore, décrits ci-avant, avec des polyorganosiloxanes de formule générale moyenne précitée:

$R_c(R'O)_dSiO_{\frac{4-c-d}{2}}$

dans laquelle les symboles R et R' ont la sigification des mêmes symboles R et R', utilisés précédemment pour la description des gommes A/, (plus exactement le symbole R représente un radical méthyle, éthyle, n-propyle, phényle, vinyle, trifluoro-3,3,3 propyle, le symbole R' représente un atome d'hydrogène, un radical alcoyle ayant de 1 à 4 atomes de carbone, un radical bétaméthoxyéthyle) le symbole c représente un nombre quelconque allant de 0,5 à 3 et le symbole d représente un nombre quelconque allant de zéro à 1.

Ces organopolysiloxanes peuvent présenter une structure linéaire, cyclique ou ramifiée.

Les diorganopolysiloxanes linéaires englobent ceux constitués d'un enchaînement de motifs $R_2SiO$ et bloqués à chaque extrémité de leur chaîne par des motifs de formule $R_3SiO_{0,5}$ et/ou des radicaux de formule OR'; la viscosité de ces diorganopolysiloxanes peut s'étendre de 10 à 1 000 000 mpa.s à 25°C. A titre illustratif, peuvent être cités les huiles diméthylpolysiloxaniques de viscosité 50 à 5000 mpa.s à 25°C, bloquées à chaque extrémité de leur chaîne par un radical triméthylsiloxy, un radical hydroxyle ou un radical alcoxyle tel que méthoxyle, éthoxyle, n-propoxyle, n-butoxyle.

Les diorganopolysiloxanes cycliques englobent ceux répondant à la formule:

$(SiR_2O)_f[SiR(OR')O]_{f'}$ dans laquelle le symbole f représente un nombre entier de 3 à 15 et le symbole f' un nombre de zéro à 3,

A titre illustratif peuvent être cités l'hexaméthylcyclotrisiloxane, l'octméthylcyclo tétrasiloxane, le décamethylcyclopentasiloxane.

Les organopolysiloxanes ramifiés, à l'état liquide ou résineux, englobent les polymères constitués de motifs choisis parmi ceux de formules $R_3SiO_{0,5}$, $R_2SiO$, $RSiO_{1,5}$, $SiO_2$, $R_2(R'O)SiO_{0,5}$, $R'OSiO_{1,5}$, $(R'O)_2SiO$ ces motifs étant répartis de matière à conduire à un rapport R/Si allant de 0,5 à 1,8 et un rapport RO'/Si allant de 0 à 0,8.

A titre illustratif peuvent être citées les résines organopolysiloxaniques formées:

- de motifs de formules $(CH_3)_3SiO_{0,5}$ et $SiO_2$, de rapport $CH_3/Si = 0,9$ à 1,5 ayant 0,2 à 1 % de groupes hydroxyle,
- de motifs de formules $CH_3SiO_{1,5}$, $(CH_3)_2SiO$, $(CH_3)_3SiO_{0,5}$, de rapport $CH_3/Si = 1,05$ à 1,6, ayant de 0,1 à 3 % de groupes éthoxyle,
- de motifs de formules $CH_3SiO_{1,5}$, $C_6H_5SiO_{1,5}$, $(CH_3)_2SiO$, de rapport $(CH_3 + C_6H_5)/Si = 1,2$ à 1,6 ayant de 0,1 à 2 % de groupes hydroxyle.

La réaction entre les dérivés organiques ou minéraux du bore et les organopolysiloxanes a lieu par chauffage, de préférence à des températures comprises dans l'intervalle 100 à 250°C, pendant une durée suffisante pour obtenir un mélange homogène, les quantités mises en présence étant, par exemple, de 1 à 30 parties de dérivés du bore pour 100 parties des organopolysiloxanes. Des catalyseurs peuvent être ajoutés tels que le chlorure ferrique, le chlorure d'aluminium, pour accélérer la réaction. Cependant, leur emploi n'est pas indispensable étant donné qu'ils sont difficiles à éliminer des produits de réaction.

Au cours de la réaction, il se forme souvent des produits volatils. Ils peuvent être éliminés par chauffage prolongé à la pression atmosphérique ou par une durée de chauffage plus courte en appliquant une pression inférieure à la pression atmosphérique. Des modes de préparation des borosiloxanes figurent en particulier dans les FR-A-1 248 775, FR-A-1 377 569, FR-A-1 509 310, FR-A-1 591 565, US-A-3 310 521, JP-A-52.022051.

En dehors des constituants A/, B/, C/, D/ et des additifs E/, F/, G/, H/, peuvent être incorporés des pigments minéraux et organiques tels que du noir de carbone, de la poudre d'aluminium, des phtalocyanines ainsi que des stabilisants thermiques tels que des sels d'acides carboxyliques de fer, de cérium, de manganèse.

D'autres adjuvants sont encore envisageables (par exemple (1) des agents neutralisant les produits de décomposition formés au cours de la réticulation ou à température élevée, tels que les hydroxydes et oxydes de calcium, de magnésium, de baryum, (EP-A-51 396), les sels d'acides carboxyliques de calcium, le silicate de calcium (2) des agents retardant la combustion à base de dérivés du platine.

Ces dérivés du platine sont choisis généralement parmi l'acide chloroplatinique $H_2PtCl_6.6H_2O$, le chlorure platinique $CL_4Pt$ et le chloure platineux $Cl_2Pt$, et leurs complexes ou leurs produits de réaction avec des composés organiques ou organosiliciques. Ils sont, de préférence, associés avec des oxydes et hydroxydes de cérium ou avec des oxydes de titane, de fer ou d'aluminium obtenus par combustion. De telles associations figurent, entre autres, dans FR-A-2 051 792, FR-A-2 166 313, FR-A-2 203 846.

La préparation des compositions conformes à l'invention s'effectue à l'aide de moyens mécaniques connus, par example de pétrins, de mélangeurs à cylindres, de mélangeurs à vis. Les divers constituants sont incorporés dans ces appareils dans un ordre pouvant être quelconque. Il est toutefois recommandé de charger tout d'abord les gommes A/ et les silices renforçantes B/ et en dernier lieu les peroxydes D/.

Les compositions obtenues sont stables au stockage; par ailleurs, elles possèdant la faculté, très recherchée par les fabricants et formulateurs, de se travailler aisément sur les mélangeurs à cylindres du fait de leur cohésion et tenacité élevées. Ainsi, elles ne collent pas sur les cylindres même lorsqu'elles sont façonnées en feuilles de 0,5 mm d'épaisseur.

Elles sont durcissables en élastomères par chauffage sous pression ou à l'air ambiant à des températures de l'ordre de 100 à 350°C. La durée de chauffage varie évidemment avec la température, la pression et la nature des peroxydes; elle est généralement de pluiseurs minutes vers 100-200°C et de quelques secondes vers 250-350°C.

Les élastomères ainsi formés peuvent être chauffés ultérieurement, surtout ceux obtenus par moulage, dans l'intervalle 200-280°C, pendant une période d'au moins l'heure, dans le dessein d'achever leur réticulation et d'éliminer les matières volatiles qu'ils renferment.

Néanmoins, ces élastomères possèdent dès la fin de leur première phase de réticulation, c'est-à-dire avant la phase éventuelle de post-chauffage, de bonnes caractéristiques physiques et plus précisément une résilience élevée et une excellente tenue à la déformation à la compression.

De plus, ils peuvent présenter une nette transparence qu'ils conservent même après une longue période d'abandon à température élevée, par exemple vers 200-250°C. Pour obtenir cette transparence, il faut mettre en oeuvre des compositions ne renfermant ni pigments, ni charges autres que celles à base de silices renforçantes (silice de combustion, silice de précipitation, aérogel de silice) ni polymères fluorés F/ autres que ceux dispersés à l'état colloidal dans un milieu aqueux.

Les élastomères, dérivant des compositions comportant des charges plus grossières et/ou des pigments, ainsi que des polymères fluorés F/ non micellaires, ne sont pas transparents mais ils conservent cependant une excellente stabilité thermique qui se manifeste qualitativement par le maintien de la coloration initiale.

Les compositions conformes à l'invention sont utilisables pour la fabrication par moulage, calandrage, extrusion, de nombreuses pièces en élastomères silicones ou d'objets recouverts par ces élastomères.

Ces pièces peuvent être des joints, des profilés, des tubes, des objets de protection de formes diverses, destinés par exemple aux domaines de la mécanique (bagues d'étanchéité), de l'automobile (bonnettes de phares, capuchons de bougies), du bâtiment (joints d'huisserie), de l'électroménager (joints des portes de fours, de frigidaires).

Les objets recouverts d' élastomères concernant plus spécialement les câbles électriques entourés d'une gaine en élastomère, les associations composites constituées de tisaus de verre (ou d'autres matériaux plats) et de feuilles d'élastomère.

Les pièces peuvent être utilisées également dans le domaine médical, pharmaceutique, alimentaire, grâce à la parfaite innocuité des élastomères silicones; elles sont, dans ces applications, de préférence translucides ou même transparentes. Elles peuvent, par exemple, avoir la forme de tubes (pour les appareils de transfusion sanguine, de dialyse), de tétines, de bouchons, de plaques (pour l'isolation thermique...

Les exemples suivants illustrent l'invention sans en limiter la portée.

**EXEMPLE 1:** On mélange intimement à l'aide d'un malaxeur les ingrédients suivants:

- 80 parties d'une gomme diorganopolysiloxanique, de viscosité environ 25 Millions de mPa.s à 25°C, bloquée à chaque extrémité de sa chaîne par un motif diméthylvinylsiloxy, et comportant dans sa chaîne 99,9 % de motifs diméthylsiloxy et 0,1 % de motif méthylvinylsiloxy.
- 20 parties d'une gomme diméthylpolysiloxanique, de viscosité 20 millions de mPa.s à 25°C, bloquée à chaque extrémité de sa chaîne par un motif triméthylsiloxy.
- 1,5 partie d'une dispersion aqueuse renfermant 60 % en poids de particules de polytétrafluoroéthylène (de diamètre moyen 0,25 à 0,35 µm) et 3 % en poids d'un agent dispersant non ionique.
- 2 parties d'un méthylpolysiloxane boré préparé comme décrit à l'exemple 1 de FR-A-1 377 569.
- 0,5 partie d'un méthylhydrogénopolysiloxane linéaire, de viscosité 45mpa.s à 25°C, bloqué à chaque extrémité de sa chaîne par un motif triméthylsiloxy, comportant dans sa chaîne essentiellement des motifs méthylhydrogénosiloxy.
- 30 parties d'une silice de précipitation de surface spécifique externe 155m$^2$/g.

Le malaxage est arrêté 30 minutes après la fin de l'introduction de la silice. On enlève du malaxeur la composition homogène venant d'être préparée, la transfère sur un mélangeur à 2 cylindres et lui incorpore, à l'aide de ce mélangeur, 0,5 % en poids du diméthyl-2,5-di(tertiobutylperoxy)-2,5 hexane.

On constate que, pour un écartement très faible de 0,5 mm des cylindres, la composition se travaille rapidement et sans adhérer aux cylindres.

La composition catalysée est durcie en élastomère par chauffage dans des moules (dont certains ont une profondeur de 2 mm, et d'autres de 8 mm), pendant 10 minutes à 170°C sous une pression de 30 bars. Les plaques d'élastomères obtenues sont alors placées pendant 4 heures dans une étuve ventilée portée à 200°C. On constate la bonne transparence des plaques.

On prélève ensuite dans ces plaques des échantillons normalisés et mesure les propriétés suivantes:

- dureté Shore selon la norme ASTMD 2240
- résistance à la rupture (R/R) selon la norme AFNOR T 46002 correspondant à la norme ASTMD 412
- allongement à la rupture en % selon la norme précédente T 46002
- résistance à la déchirure (R/D) selon la norme ASM D 624.
- déformation rémanente à la compression (DRC) mesurée en % après chauffage des éprouvettes pendant 22 h à 177°C sous 25 % de compression
- résilience ZWICK en % selon la norme DIN 53512

Les résultats sont les suivants:

- dureté Shore 43
- R/R en MPa 5,3
- allongement à la rupture en % 400
- R/D en kN/m 10
- DRC en % 18
- résilience ZWICK en % 55

On reproduit l'essai ci-avant en suivant le même processus et en utilisant exactement les mêmes constituants sauf qu'on ajoute 0,1 partie du silane de formule $CH_2=C(CH_3)COO(CH_2)_3Si(OCH_3)_3$.

Les résultats sont les suivants sur le plan des propriétés:

- dureté Shore A 46
- R/R en MPa 5,6
- allongement à la rupture en % 370
- R/D en kN/m 10
- DRC en % 15
- résilience ZWICK en % 60

**EXEMPLE 2** On mélange intimement à l'aide d'un malaxeur les ingrédients suivants:

- 100 parties d'une gomme diorganopolysiloxanique de viscosité 30 millions de mPa.s à 25°C, bloquée à chaque extrémité de sa chaîne par un motif diméthylvinylsiloxy, comportant dans sa chaîne 99,8 % de motifs diméthylsiloxy et 0,2 % de motifs méthylvinylsiloxy.

- 2 parties d'une dispersion aqueuse renfermant 60 % en poids de particules de polytétrafluoroéthylène (de diamètre moyen 0,25 à 0,35 µm) et 3 % en poids d'un agent dispersant non ionique.

- 1 partie du silane de formule $CH_2=C(CH_3)COO(CH_2)_3Si(OCH_3)_3$

- 2,5 parties d'un méthylpolysiloxane boré préparé comme décrit à l'exemple 1 de FR-A-1 377 569.

- 1,5 partie d'une huile diméthylpolysiloxanique de viscosité 50 mPa.s à 25°C, bloquée à chaque extrémité de sa chaine par un radical hydroxyle lié à l'atome de silicium terminal.

- 1,2 partie d'un méthylhydrogénopolysiloxane ramifié de viscosité 15 mPa.s à 25°C, constitué de motifs $(CH_3)_2HSiO_{0,5}$ et $SiO_2$ répartis respectivement dans le rapport 2.

- 50 parties d'une silice de précipitation de surface spécifique externe 155 m²/g.

Le malaxage est arrêté 1 heure après la fin de l'introduction de l'ensemble des réactifs.

La composition homogène obtenue est sortie du malaxeur puis transférée sur un mélangeur à deux cylindres; on lui incorpore alors, à l'aide de ce mélangeur, 0,5 % en poids du diméthyl-2,5 di(tertiobutylperoxy-2,5) hexane. On constate au cours de cette étape que la composition, d'une part ne colle pas à la surface des cylindres, et d'autre part se travaille aisément grâce à sa forte cohésion.

La composition catalysée est durcie en élastomère par chauffage, de la manière décrite à l'exemple 1, dans des moules pendant 10 minutes à 170°C sous une pression de 30 bars.

Les plaques d'élastomères ainsi préparées sont transparentes. Elles sont recuites par chauffage à 200°C pendant 4 heures. Elles conservent après ce traitement leur bonne transparence. On prélève ensuite, dans ces plaques recuites, des échantillons normalisés et mesure leurs caractéristiques physiques. On trouve:

- dureté Shore A 73
- R/R en MPa 6,4
- allongement a la rupture en % 230
- R/D en kN/m 11
- DRC en % 19
- résilience WICK en % 51

**EXEMPLE 3** A1/ On mélange intimement à l'aide d'un malaxeur les ingrédients suivants:

- 100 parties d'une gomme diorganopolysiloxanique de viscosité 30 millions de mPa.s à 25°C, bloquée à chaque extrémité de sa chaîne par un motif diméthylvinylsiloxy, comportant dans sa chaine 94,8 % de motifs diméthylsiloxy, 5 % de motifs diphénylsiloxy et 0,2 % de motifs méthylvinylsiloxy.

- 1,5 partie d'une dispersion aqueuse renfermant 60 % en poids de particule de polytétrafluoroéthylène (de diamètre moyen 0,25 à 0,35 µm) et 3 % en poids d'un agent dispersant non ionique.

- 0,3 partie du produit de réaction (décrit à l'exemple 1a) de FR-A-2 447 386) entre le silane de formule $CH_2=C(CH_3)COO(CH_2)_3Si(OCH_3)_3$ et une huile diméthylpolysiloxanique bloquée à chaque extrémité de sa chaine par un radical hydroxyle lié à l'atome de silicium, de viscosité 100 mPa.s à 25°C. Ce produit est un liquide de viscosité 1000 mPa.s à 25°C.

- 6 parties d'une huile diméthylpolysiloxanique de viscosité 100 mPa.s à 25°C, bloquée à chaque extrémité de sa chaine par un radical hydroxyle lié à l'atome de silicium.

- 0,7 partie d'un méthylhydrogénopolysiloxane linéaire de viscosité 45 mPa.s à 25°C, bloqué à chaque extrémité de sa chaine par un motif triméthylsiloxy, comportant dans sa chaine essentiellement des motifs méthylhydrogénosiloxy.

- 38 parties d'une silice de combustion de surface spécifique 200m²/g.

Le malaxage est arrêté une heure après la fin de l'introduction de tous les réactifs. La composition obtenue est sortie du malaxeur puis placée sur un mélangeur à deux cylindres: on lui incorpore, alors à l'aide du mélangeur, 1,5 % en poids d'une pâte renfermant du peroxyde de dichloro-2,4 benzoyle dispersé dans une huile bis (triméthylsiloxy)diméthylpolysiloxanique, de viscosité 1000 mPa.s à 25°C, dans le rapport pondéral 50/50.

La composition catalysée se détache aisément des cylindres du mélangeur. Elle est ensuite extrudée en un ruban de 2 mm d'épaisseur.

Ce ruban est ensuite durci par passage pendant 20 secondes dans un four porté à 350°C. Des portions de ruban sont recuites par chauffage à 200°C pendant 4 heures. Elles sont transparentes dans toute leur masse sans trace d'opalescence. On mesure leurs caractéristiques physiques, on trouve:

| | |
|---|---|
| - dureté Shore A | 55 |
| - R/R en MPa | 9,1 |
| - allongement à la rupture en % | 450 |
| - R/D en kN/m | 15 |
| - DRC en % | 20 |
| - résilience ZWICK en % | 50 |

A2/ -On reproduit l'essai sous A1/ en suivant le même processus et en utilisant les mêmes constituants, sauf qu'on utilise, à la place de 1,5 partie de la dispersion aqueuse renfermant 60 % en poids de particules de polytétratrafluoroéthylène, 1 partie d'une poudre de polytétrafluoroéthylène de diamètre particulaire moyen 100 µm.

On note que les caractéristiques physiques des plaques recuites d'élastomères sont pratiquement identiques à celles fabriquées sous A1/; cependant, la transparence des plaques a disparu, elle est remplacée par une nette opalescence.

A3/ -De même, on refait un autre essai, analogue à celui sous A2/, mais cette fois on conserve 1,5 partie de la dispersion aqueuse à 60 % en poids de particules de polytétrafluoroéthylène et on ajoute, en outre, 0,5 partie d'un mélange pondéral 50/50 d'acide borique B $(OH)_3$ et d'une gomme diméthylpolysiloxanique bloquée à chaque extrémité de sa chaine par un motif triméthylsiloxy, de viscosité 50 000 000 mPa.s à 25°C.

On constate une amélioration de la ténacité des compositions; en particulier, ces compositions peuvent subir des étirements importants sans se déchirer. Les autres propriétés des compositions ainsi que les propriétés des élastomères en dérivant sont analogues à celles figurant sous A1/.

## Revendications

1. Compositions élastomériques organopolysiloxaniques vulcanisables à chaud, caractérisées en ce qu'elles comportent:

A) 100 parties d'une gomme diorganopolysiloxanique ayant une viscosité supérieure à 1 000 000 mPa.s à 25°C,

B) 5 à 150 parties d'une charge renforçante,

D) 0,1 à 7 parties d'un peroxyde organique et, un groupe d'au moins 3 additifs choisis parmi les 4 additifs suivants

E) 0,1 à 5 parties d'un organohydrogénopolysiloxane,

F) 0,1 à 6 parties d'un polymère organofluoré,

G) 0,02 à 4 parties d'un composé organosiloxanique comportant relié à l'atome de silicium au moins un groupe acroyloxyalcoyle ou méthacroyloxyalcoyle,

H) 0,1 à 4 parties d'un composé renfermant du bore.

2. Compositions selon la revendication 1, caractérisées en ce qu'elles comportent en outre jusqu'à 15 parties d'une huile diorganopolysiloxanique C) de viscosité d'au plus 5000 mPa.s à 25°C formée d'un enchainement de motifs de formule $R''_2SiO$, bloquée à chaque extrémité de sa chaine par un radical de formule OR', dans ces formules les symboles R'', identiques ou différents, représentent des radicaux méthyle, phényle, vinyle, au moins 40 % de ces radicaux étant méthyle et le symbolé R' représente un atome d'hydrogène, un radical alcoyle ayant de 1 à 4 atomes de carbone, le radical bétaméthoxy-éthyle.

3. Compositions selon la revendication 1 ou 2 caractérisées en ce que la charge renforçante est une silice de combustion ou de précipitation de surface spécifique d'au moins 50 $m^2/g$.

4. Compositions selon l'une quelconque des revendications précédentes, caractérisées en ce que la gomme A/, formée d'un enchainement de motifs de formule $R_2SiO$ est bloquée à chaque extrémité de sa chaine par un motif de formule $R_3SiO_{0,5}$ et/ou un radical de formule OR'; dans ces formules les symboles R, identiques ou différents, représentent des radicaux méthyle, éthyle, n-propyle, phényle, vinyle et trifluoro-3,3,3 propyle, au moins 60 % de ces radicaux étant méthyle et au plus 3 % étant vinyle, le symbole R' représente un atome d'hydrogène, un radical alcoyle ayant de 1 à 4 atomes de carbone, le radical bétaméthoxy-éthyle.

5. Compositions selon l'une quelconque des revendications précédentes, caractériséas en ce que l'additif E/ est un organohydrogénopolysiloxane de formule générale moyenne $H_b(R'')_aSiO_{\frac{4-a-b}{2}}$ dans laquelle le symbole R''

a la signification donnée à la revendication 2 pour le constituant C/, le symbole a représente un nombre quelconque allant de 0,4 à 2 et le symbole b représente un nombre quelconque allant de 0,2 à 1.

6. Compositions selon l'une quelconque des revendications précédentes, caractérisées en ce que l'additif F/ est un polymère organofluoré utilisé sous la forme d'un solide pulvérulent et/ou d'une dispersion aqueuse.

7. Compositions selon l'une quelconque des revendications précédentes, caractérisées en ce que l'additif G/ est un silane répondant à la formule:

$$CH_2=CR^3COO(CH_2)_w\underset{(R'')_u}{\underset{|}{Si}}(OR^4)_{3-u}$$

dans laquelle le symbole R" a la signification donnée à la revendication pour le constituant C/, le symbole $R^3$ représente un atome d'hydrogène, le radical méthyle, le symbole $R^4$ représente un radical méthyle, éthyle, n-propyle, bétaméthoxyéthyle, le symbole w représente un nombre de 1 à 5 et le symbole représente un nombre de 0 à 2.

8. Compositions selon l'une quelconque des revendications précédentes, caractérisées en ce que l'additif H/ est un composé renfermant du bore, utilisé sous la forme d'un dérivé organique ou minéral du bore ou d'un borosiloxane provenant de la réaction dudit dérivé du bore avec un polyorganosiloxane de formule générale moyenne:

$R_c(OR')_dSiO_{\frac{4-c-d}{2}}$

dans laquelle les symboles R et R' ont chacun la signification donnée à la revendication 4 pour le constituant A/, le symbole c représente un nombre quelconque allant de 0,5 à 3 et le symbole d représente un nombre quelconque allant de zéro à 1.

**Patentansprüche**

1. In der Hitze vulkanisierbare, elastomere Organopolysiloxanzusammensetzungen, dadurch gekennzeichnet, daß sie enthalten:

A) 100 Teile eines Diorganopolysiloxangummis mit einer Viskosität oberhalb 1 000 000 mPa.s bei 25°C,

B) 5 bis 150 Teile eines verstärkenden Füllstoffs,

D) 0,1 bis 7 Teile eines organischen Peroxids und eine Gruppe von wenigstens 3 Zusatzmitteln, ausgewählt unter den folgenden 4 Zusatzmitteln,

E) 0,1 bis 5 Teile eines Organohydrogenpolysiloxans,

F) 0,1 bis 6 Teile eines organofluorierten Polymeren,

G) 0,02 bis 4 Teile einer Organosiloxanverbindung, welche, gebunden an das Siliciumatom, wenigstens eine Acroyloxyalkyl- oder Methacroyloxyalkylgruppe trägt,

H) 0,1 bis 4 Teile einer Verbindung, die Bor enthält.

2. Zusammensetzungen gemäß Anspruch 1, dadurch gekennzeichnet, daß sie außerdem bis zu 15 Teile eines Diorganopolysiloxanöls C) der Viskosität von höchstens 5 000 mPa.s bei 25°C enthalten, gebildet aus einer Verkettung von Gruppierungen der Formel $R''_2SiO$, blockiert an jedem äußeren Ende der Kette durch einen Rest der Formel OR", wobei in diesen Formeln die Symbole R", die identisch oder verschieden sind, Methyl-, Phenyl-, Vinylreste bedeuten, wobei mindestens 40 % dieser Reste Methyl sind und das Symbol R' ein Wasserstoffatom, einen Alkylrest mit 1 bis 4 Kohlenstoffatomen oder den beta-Methoxyethylrest bedeutet.

3. Zusammensetzungen gemäß den Ansprüchen 1 oder 2, dadurch gekennzeichnet, daß der verstärkende Füllstoff ein Verbrennungs- oder Fällungssiliciumdioxid ist, mit einer spezifischen Oberfläche von mindestens 50 $m^2/g$.

4. Zusammensetzungen gemäß einem der vorhergehenden Ansprüche, dadurch gekennzeichnet, daß das Gummi A), das aus einer Verkettung von Gruppierungen der Formel $R_2SiO$ gebildet ist, an jedem Kettenende durch eine Gruppierung der Formel $R_3SiO_{0,5}$ und/oder einen Rest der Formel OR' blockiert ist; in diesen Formeln bedeuten die Symbole R, die identisch oder verschieden sind, Methyl-, Ethyl-, n-Propyl-, Phenyl-, Vinyl- und 3,3,3-Trifluorpropylreste, wobei mindestens 60 % dieser Reste Methyl sind und höchstens 3 % Vinyl sind, und das Symbol R' bedeutet ein Wasserstoffatom, einen Alkylrest mit 1 bis 4 Kohlenstoffatomen, den beta-Methoxyethylrest.

5. Zusammensetzungen gemäß einem der vorhergehenden Ansprüche, dadurch gekennzeichnet, daß der Zusatzstoff E) ein Organohydrogenpolysiloxan der allgemeinen mittleren Formel

>r $H_b(R'')_aSiO_{\frac{4-a-b}{2}}$

ist, worin das Symbol R" die in Anspruch 2 für den Bestandteil C) angegebene Bedeutung hat, das Symbol a irgendeine Zahl von 0,4 bis 2 bedeutet und das Symbol b irgendeine Zahl von 0,2 bis 1 bedeutet.

6. Zusammensetzungen gemäß einem der vorhergehenden Ansprüche, dadurch gekennzeichnet, daß der Zusatzstoff F) ein organofluoriertes Polymeres ist, das in Form eines gepulverten Feststoffs und/oder einer

wäßrigen Dispersion verwendet wird.

7. Zusammensetzungen gemäß einem der vorhergehenden Ansprüche, dadurch gekennzeichnet, daß der Zusatzstoff G) ein Silan der Formel:

$$CH_2{=}CR^3COO(CH_2)_w\underset{\displaystyle |\atop (R'')_u}{Si}(OR^4)_{3-u}$$

worin das Symbol R" die in Anspruch 2 für den Bestandteil C) angegebene Bedeutung hat, das Symbol $R^3$ ein Wasserstoffatom, den Methylrest bedeutet, das Symbol $R^4$ einen Methyl-, Ethyl-, n-Propyl, beta-Methoxyethylrest bedeutet, das Symbol w eine Zahl von 1 bis 5 und das Symbol u eine Zahl von 0 bis 2 bedeutet.

8. Zusammensetzungen gemäß einem der vorhergehenden Ansprüche, dadurch gekennzeichnet, daß der Zusatzstoff H) eine Bor-enthaltende Verbindung ist, die in Form eines organischen oder mineralischen Derivats des Bors verwendet wird oder eines Borsiloxans, stammend von der Reaktion dieses Derivats des Bors mit einem Polyorganosiloxan der mittleren allgemeinen Formel

$$R_c(OR')_dSiO_{\frac{4-c-d}{2}}$$

worin die Symbole R und R' jeweils die in Anspruch 4 für den Bestandteil A) angegebene Bedeutung haben, das Symbol c irgendeine Zahl von 0,5 bis 3 bedeutet und das Symbol d irgendeine Zahl von 0 bis 1 bedeutet.

## Claims

1. Hot-vulcanizable organopolysiloxane elastomeric compositions, characterized in that they comprise:

A) 100 parts of a diorganopolysiloxane resin with a viscosity greater than 1 000 000 mPa s at 25° C,

B) 5 to 150 parts of a reinforcing filler,

D) 0.1 to 7 parts of an organic peroxide, and a group of at least 3 additives chosen from the 4 following additives

E) 0.1 to 5 parts of an organohydrogenopolysiloxane,

F) 0.1 to 6 parts of an organofluoro polymer,

G) 0.02 to 4 parts of an organosiloxane compound containing, bonded to the silicon atom, at least one acryloyloxyalkyl or methacryloyloxyalkyl group,

H) 0.1 to 4 parts of a compound containing boron.

2. Compositions according to Claim 1, characterized in that they additionally comprise up to 15 parts of a diorganopolysiloxane oil C) with a viscosity not exceeding 5 000 mPa s at 25° C, composed of a concatenation of units of formula $R''_2SiO$, blocked at each end of its chain by a radical of formula OR', in these formulae the symbols R", which are identical or different, denote methyl, phenyl and vinyl radicals, at least 40 % of these radicals being methyl and the symbol R" denotes a hydrogen atom, an alkyl radical containing from 1 to 4 carbon atoms, or the beta-methoxyethyl radical.

3. Compositions according to Claim 1 or 2, characterized in that the reinforcing filler is a fume or precipitated silica with a specific surface of at least 50 $m^2/g$.

4. Compositions according to any one of the preceding claims, characterized in that the resin A/, composed of a chain of units of formula $R_2SiO$ is blocked at each end of its chain by a unit of formula $R_3SiO_{0.5}$ and/or a radical of formula OR'; in these formulae the symbols R, which are identical or different, denote methyl, ethyl, n-propyl, phenyl, vinyl and 3,3,3-trifluoropropyl radicals, at least 60 % of these radicals being methyl and not more than 3 % being vinyl, and the symbol R' denotes a hydrogen atom, an alkyl radical containing from 1 to 4 carbon atoms, or the beta-methoxyethyl radical.

5. Compositions according to any one of the preceding claims, characterized in that the additive E/ is an organohydrogenopolysiloxane of average general formula

$$H_b(R'')_aSiO_{\frac{4-a-b}{2}}$$

in which the symbol R" has the meaning given in Claim 2 for the constituent C/, the symbol a denotes any number ranging from 0.4 to 2 and the symbol b denotes any number ranging from 0.2 to 1.

6. Compositions according to any one of the preceding claims, characterized in that the additive F/ is an organofluoro polymer employed in the form of a pulverulent solid and/or of an aqueous dispersion.

7. Compositions according to any one of the preceding claims, characterized in that the additive G/ is a silane corresponding to the formula:

$$CH_2=CR^3COO(CH_2)_w\underset{(R'')_u}{\underset{|}{Si}}(OR^4)_{3-u}$$

in which the symbol R" has the meaning given in the claim for the constituent C/, the symbol $R^3$ denotes a hydrogen atom or the methyl radical, the symbol $R^4$ denotes a methyl, ethyl, n-propyl or beta-methoxyethyl radical, the symbol w denotes a number from 1 to 5 and the symbol u denotes a number from 0 to 2.

8. Compositions according to any one of the preceding claims, characterized in that the additive H/ is a compound containing boron, employed in the form of an organic or inorganic derivative of boron or of a borosiloxane originating from the reaction of the said boron derivative with a polyorganosiloxane of average general formula:

$$R_c(OR')_dSiO_{\frac{4-c-d}{2}}$$

in which the symbols R and R' each have the meaning given in Claim 4 for the constituent A/, the symbol c denotes any number ranging from 0.5 to 3 and the symbol d denotes any number ranging from zero to 1.